# EUROPEAN PATENT APPLICATION

(11) **EP 4 763 442 A1**
(43) Date of publication of application: **24.06.2026**
(21) Application number: 24386145.7
(22) Date of filing: 19.12.2024
(51) Int. Cl.: B25J 17/02

(54) **PASSIVE CENTRALISER**

(71) Applicant: Ocado Innovation Limited, Hatfield, Hertfordshire AL10 9UL (GB)
(72) Inventor: Smith, Alice, Hatfield, Hertfordshire AL10 9UL (GB); Mavridis-Tourgelis, Andreas, Hatfield, Hertfordshire AL10 9UL (GB)
(74) Representative: Ocado Group IP Department

(57) **Abstract**

A passive centraliser is provided for compensating horizontal misalignment between an end effector and a target object, the passive centraliser being configured to connect the end effector to a robot arm, the passive centraliser comprising:
a housing configured to connect to the robot arm, the housing comprising a base having an opening;
an assembly within the housing, the assembly comprising a centrally located protrusion that protrudes through the opening of the housing and is configured to connect to the end effector;
the passive centraliser being moveable between an unlocked position in which the assembly is able to move horizontally relative to the housing, and a locked position in which the assembly is not able to move horizontally relative to the housing,
characterised in that:
the base has an upper surface downwardly inclined toward the opening; and
the assembly comprises a lower surface complementary to the shape of the downwardly inclined upper surface of the base;
wherein:
in the unlocked position the assembly is lifted vertically to separate the lower surface of the assembly from the upper surface of the base and to enable the protrusion to move laterally within the opening; and
when the end effector lifts an object, the weight of the object pulls the assembly down into the locked position to cause the lower surface of the assembly to rest on the upper surface of the base and to position the protrusion centrally in the opening.

A robot arm is provided, connected to an end effector via a passive centraliser as defined herein.

## Description

### Technical Field

This disclosure relates to a passive centraliser, and robot arm, for compensating misalignment between an end effector and a target object. The passive centraliser is configured to connect a robot arm to an end effector.

### Background

Compliance compensators are well known. Compliance compensators are installed between a robot arm and an end effector, and allow for misalignment between the end effector and a target object by allowing the end effector to move between its central or nominal position, and an offset position in which the end effector can engage with the target object. Once the end effector has picked up or otherwise interacted with the target object, the compliance compensator recentralises, i.e. returns to its central or nominal position.

Compliance compensators need actively recentering, typically with pneumatics/compressed air or electromagnets. Compliance compensators that use compressed air of course require a compressed air supply, which in turn means more parts and overall a more complex mechanism. Electromagnets and compressed air recentering both require a power supply for actuation of the centraliser mechanism, either to power the electromagnet or to open a valve for the compressed air. Not only does the requirement for powered actuation require the mechanism to be more complex, but also controlling the actuation introduces another layer of complexity and could make the compliance compensator react more slowly. Another option is to use springs to return the compensator to its central position may be susceptible to fatigue failures, and again require more parts and a complex mechanism.

An example of commercially available compliance compensators is the Universal Compliance Compensator (UCC), a device that offers a combination of compliance behaviours including X-Y lateral, X-Y-Z rotation and Z compression. UCCs are used in applications including automated assembly, bin picking, loading and unloading, and finishing operations. After compliance, the UCC returns to centre by means of a pressurized internal reset piston.

Force torque sensing is another commercially available technology for controlling robots. Force torque sensors are attached between the robot arm and end effector, and precisely measure the forces applied during movement of the robot arm and interaction between the end effector and target object. A control unit corrects the robot path based on these measured forces and torques. Force torque sensing, however, requires a power supply, as well as being a more complex and expensive system. External wear on power cables is a significant failure mode for many applications of robot arms.

A simple, inexpensive, and quick-to-actuate mechanism is needed as an alternative to known compliance compensators.

### Summary

A passive centraliser is provided for compensating misalignment between an end effector and a target object, the passive centraliser being configured to connect the end effector to a robot arm, the passive centraliser comprising:
a housing configured to connect to the robot arm, the housing comprising a base having an opening;
an assembly within the housing, the assembly comprising a protrusion that protrudes through the opening of the base and is configured to connect to the end effector;
the passive centraliser being moveable between an unlocked position in which the assembly is able to move horizontally relative to the housing, and a locked position in which the assembly is restricted from moving horizontally relative to the housing,
wherein:
   the base has an upper surface downwardly inclined toward the opening; and
   the assembly comprises a lower surface complementary to the shape of the downwardly inclined upper surface of the base;
   wherein:
      in the unlocked position the assembly is lifted vertically to separate the lower surface of the assembly from the upper surface of the base and to enable the protrusion to move laterally within the opening; and
      when the end effector lifts an object, the weight of the object pulls the assembly down into the locked position to cause the lower surface of the assembly to rest on the upper surface of the base and to position the protrusion centrally in the opening.

The passive centraliser enables the end effector to return to its central position. Advantageously, the assembly returns to the central or locked position by the action of gravity, i.e. the weight of the target object held by the end effector pulls the assembly down into the central position. The centraliser is thus described as "passive", since recentering happens automatically as soon as an object is lifted, rather than any active steps needing to be taken in order to return to the centre position. This is different from prior art compliance compensators, which need to be actively recentered, for example with a spring or compressed air. Advantageously, passive recentering is a simpler mechanism with fewer parts and resulting lower costs. The absence of an active recentering mechanism makes the passive centraliser simpler in design, less expensive, and able to react more quickly.

The housing may comprise a base and side walls, or just a base, or a base with an open frame structure, or any other arrangement suitable for housing the assembly. The housing may comprise a lid. The housing may be formed as a single part, or may comprise several parts.

The gravity-driven passive centering mechanism is suitable for applications where the end effector approaches the target object in a vertical or substantially vertical direction.

In the unlocked position, the assembly is able to move horizontally relative to the housing. Since the assembly is connected to the end effector via the centrally located protrusion, and the housing is connected to the robot arm, moving the assembly relative to the housing means that the end effector moves horizontally relative to the robot arm.

In the unlocked position, the assembly is able to move relative to the housing as the lower surface of the assembly slides along the upper surface of the base of the housing. The movement has a horizontal component (which permits horizontal compliance as the end effector moves horizontally with respect to the robot arm) and a vertical component.

The housing may comprise a lid, and the compliance compensator may comprise a resilient member positioned between the lid and the assembly, the resilient member being arranged to bias the assembly upwards to retain the assembly in the unlocked position.

The resilient member may be biased towards retaining the assembly in the unlocked position, which is different from prior art compliance compensators that use a spring to recentralise. The resilient member acts to pull the assembly upwards towards the lid of the housing. With the assembly pulled upwards, the lower surface of the assembly is no longer constrained in the locked position by the shape of the upper surface of the base of the housing. By contrast, springs of prior art spring compliance compensators act horizontally to return the assembly to a central position within the housing.

The resilient member may be a spring. The spring may be cylindrical in shape, arranged with its axis in the vertical direction. The spring may be a compression spring. The spring may be a wave spring. Advantageously, a wave spring can have a high spring constant while occupying a small space. The spring may be a leaf spring or a cantilever spring. Alternatively, the resilient member may be a compliant mechanism or a linkage or a flexure, or any other component suitable for biasing the assembly in the unlocked position.

The upper surface of the base may be inclined to allow the assembly to move downwards as the assembly moves in a first horizontal direction towards the opening, and to allow the assembly to move downwards as the assembly moves in a second horizontal direction towards the opening.

The first and second directions are not the same direction, and each may be substantially horizontal. The first and second horizontal directions are substantially perpendicular to the vertical. The first and second horizontal directions may be substantially perpendicular to each other, but are not limited to being perpendicular to each other. The first and second horizontal directions can be described in terms of xyz Cartesian co-ordinates: the vertical direction can be described as a z direction, the first horizontal direction can be described as an x direction, and the second horizontal direction can be described as a y direction, where x, y, and z are all mutually perpendicular.

The upper surface of the base may be conical in shape. Advantageously, the conical shape of the downwardly inclined upper surface enables the lower surface of the assembly to slide smoothly up or down on top of the upper surface. The assembly is also free to rotate about a vertical axis inside the housing; the shape of the downwardly inclined upper surface does not impede rotation of the assembly. This is particularly advantageous in examples where the passive centraliser also allows rotational compliance between the robot arm and end effector, i.e. the end effector is able to rotate about a vertical axis relative to the robot arm.

The assembly may comprise:
a first horizontal compliance body for compensating for misalignment in the first horizontal direction, and
a second horizontal compliance body for compensating for misalignment in the second horizontal direction, the second horizontal compliance body being located below the first horizontal compliance body and configured to rest on the upper surface of the base of the housing,
wherein the first horizontal compliance body is constrained to move in the first horizontal direction relative to the housing, and the second horizontal compliance body is constrained to move with the first horizontal compliance body in the first horizontal direction and constrained to move relative to the first horizontal compliance body in the second horizontal direction.

The second horizontal compliance body is therefore able to move relative to the upper surface in both the first and the second horizontal directions. Advantageously, constraining the movement of the assembly in this way provides a smoother, more stable, and more controllable movement. The first and second pins may be substantially horizontal.

The first horizontal compliance body may be connected to a lid of the housing.

The first horizontal compliance body may comprise a first horizontal pin extending in the first horizontal direction, the first horizontal pin passing through an opening extending through a first stopper, wherein the first horizontal compliance body is constrained to move in the first horizontal direction as the first horizontal pin moves in the first horizontal direction through the opening in the first stopper.

The second horizontal compliance body may comprise a second horizontal pin extending in the second horizontal direction, the second horizontal pin passing through an opening extending through a second stopper, wherein the second horizontal compliance body is constrained to move in the second horizontal direction as the second horizontal pin moves in the first horizontal direction through the opening in the second stopper.

The arrangement of pins and stoppers is a simple and reliable way of constraining the horizontal movement of the first and second horizontal compliance bodies. For convenience, for example, the stopper may be connected to the lid or be a feature of the lid and thereby visible when the lid is closed. The stopper may be connected to the lid or otherwise connected to the housing in order for the stopper to be fixed relative to the housing, to permit the pin to move through the stopper as the first or second horizontal compliance body moves relative to the housing.

The passive centraliser may further comprise a resilient member positioned between the first horizontal compliance body and the second horizontal compliance body, the resilient member being arranged to bias the assembly upwards to retain the assembly in the unlocked position.

The resilient member between the first and second horizontal compliance bodies may be provided in addition to or as an alternative to the resilient member between the assembly and the lid of the housing. As above, the resilient member may be a spring. The spring may be cylindrical in shape, arranged with its axis in the vertical direction. The spring may be a wave spring.

The upper surface of the first horizontal compliance body may comprise a ridge extending in the first horizontal direction, configured to co-operate with a correspondingly shaped groove on the underside of the rotational compliance body to constrain the first horizontal compliance body to slide in the first horizontal direction relative to the rotational compliance body.

The upper surface of the second horizontal compliance body may comprise a ridge extending in the second horizontal direction, configured to co-operate with a correspondingly shaped groove on the underside of the first horizontal compliance body to constrain the second horizontal compliance body to slide in the second horizontal direction relative to the first horizontal compliance body.

Advantageously, the ridge and groove arrangement helps to constrain and stabilise the relative horizontal movement of the first and second horizontal compliance bodies. The ridge and groove arrangement may be used in conjunction with the pin and stopper arrangement described above.

The upper surface of the base may comprise a seat and the lower surface of the assembly may comprise a corresponding lip configured to sit inside the seat when the passive centraliser is in the locked position. Advantageously, this arrangement helps to improve the stability of the passive centraliser when in the locked position. In order to lift the assembly out of the seat and slide the lower surface up over the downwardly inclined upper surface of the base of the housing, a larger force needs to be exerted on the protrusion. It is therefore less likely that the passive centraliser could be accidentally knocked out of the locked position.

The materials of the assembly and the housing may have a low coefficient of friction between the upper surface of the base and the lower surface of the assembly.

Advantageously, lower friction between the sliding surfaces enables a smoother movement, with lower frictional energy losses and reduced wear on the contacting surfaces. The lower surface of the assembly and/or the upper surface of the base of the housing may be coated with a low friction coating. Alternatively or additionally, a lubricant may be provided to reduce frictional energy loss and wear on the contacting surfaces. The housing may be sealed in order to retain the lubricant.

The passive centraliser may further comprise a rotational centraliser body positioned inside the housing below a lid of the housing and on top of and connected to the assembly, the rotational compliance body comprising a circumferential slot having a lower surface upwardly inclined towards the centre of the slot. The lid of the housing may comprise a vertical pin extending downwards through the slot and the end of the pin comprises a stop to retain the pin in the slot. In the unlocked position the rotational compliance body may be able to rotate until the pin reaches the end of its travel in the slot, and in the locked position the rotational compliance body has rotated and lowered under gravity until the pin is in the central position in the slot. Advantageously, the rotational centraliser body enables the passive centraliser to compensate for angular misalignment as well as horizontal misalignment.

The slot may comprise a plurality of slots and the vertical pin may comprise a plurality of vertical pins each extending through a respective one of the plurality of slots.

Advantageously, a plurality of slots and vertical pins provides a smoother and more stable motion between the locked (central) and unlocked (offset) positions. The vertical pins may be substantially vertical.

The plurality of slots may be evenly distributed circumferentially on the rotational compliance body.

A robot arm is provided, connected to an end effector via a passive centraliser as defined herein. The robot arm may be configured to move in a vertical direction, a first horizontal direction, and a second horizontal direction. The end effector may be configured to rotate about a vertical axis relative to the robot arm.

### Brief Description of Figures

The disclosure will be described with reference to the following drawings, which illustrate examples of how the passive centraliser may be implemented.
Figure 1 is a cross-sectional view of a passive centraliser.
Figure 2 is a perspective view from above showing the passive centraliser in (a) exploded view and (b) assembled view.
Figure 3 is a perspective view from below showing the passive centraliser in (a) exploded view and (b) assembled view.
Figure 4 is an exploded view illustrating an example of how a first horizontal compliance body is constrained to move in the first horizontal direction.
Figure 5 is an exploded view illustrating an example of how a second horizontal compliance body is constrained to move in the second horizontal direction.
Figure 6 illustrates how the passive centraliser provides rotational compliance.
Figure 7 illustrates the rotational compliance body from underneath, in (a) perspective view and (b) plan view.
Figure 8 illustrates a passive centraliser in operation: (a) the centraliser is in the unlocked position as the robot arm approaches the target object in a vertical direction (b) the end effector is about to pick up the target object (c) the end effector has picked up the target object and the passive centraliser is in its maximum offset position (d) the robot arm is lifting the target object up and the weight of the target object moves the passive centraliser back into the locked or central position.

### Detailed Description

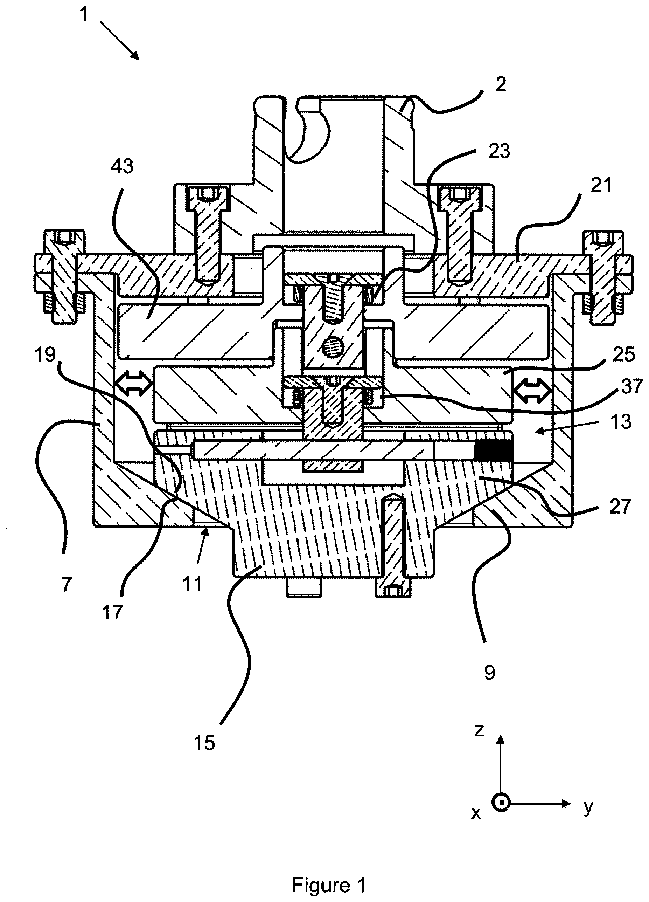

Figure 1 is a cross-sectional view of a passive centraliser 1. The passive centraliser 1 comprises an assembly 13 located inside a housing 7. The housing 7 comprises a main body connected to a lid 21 via bolts and nuts. The lid 21 is connected to a connector 2, for connecting the passive centraliser 1 to a robot arm (not shown). At the bottom of the assembly 13 is a centrally located protrusion 15 protruding through an opening 11 in the base 9 of the housing 7. The centrally located protrusion 15 connects to an end effector (not shown).

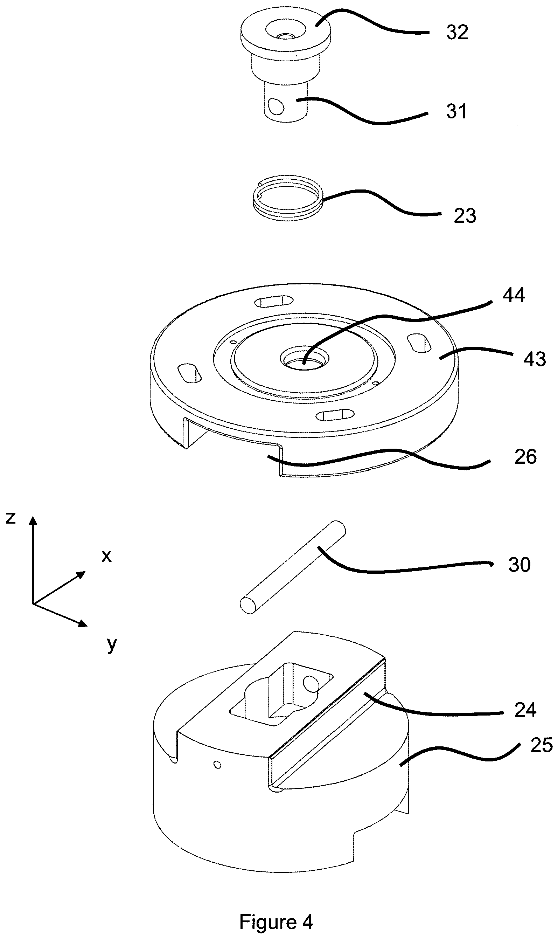

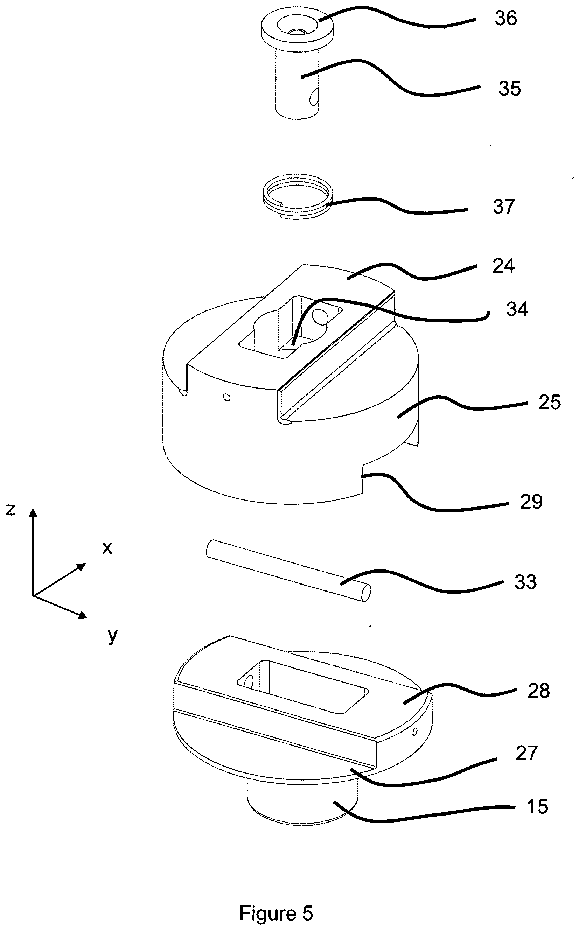

In the illustrated example, the assembly 13 comprises a first horizontal compliance body 25 and a second horizontal compliance body 27. The first horizontal compliance body 25 is located above and supported by the second horizontal compliance body 27. The first horizontal compliance body 25 is able to move in a first horizontal direction only (x direction as marked on the figure) relative to the housing 7. The second horizontal compliance body 27 is able to move in both the first horizontal direction and a second horizontal direction (y direction as marked on the figure). The first and second horizontal compliance bodies will be described in more detail later with reference to Figures 4 and 5. Although in this example the assembly comprises two bodies for providing compliance in x and y directions respectively, in other examples the assembly could be a single body or a different number of bodies.

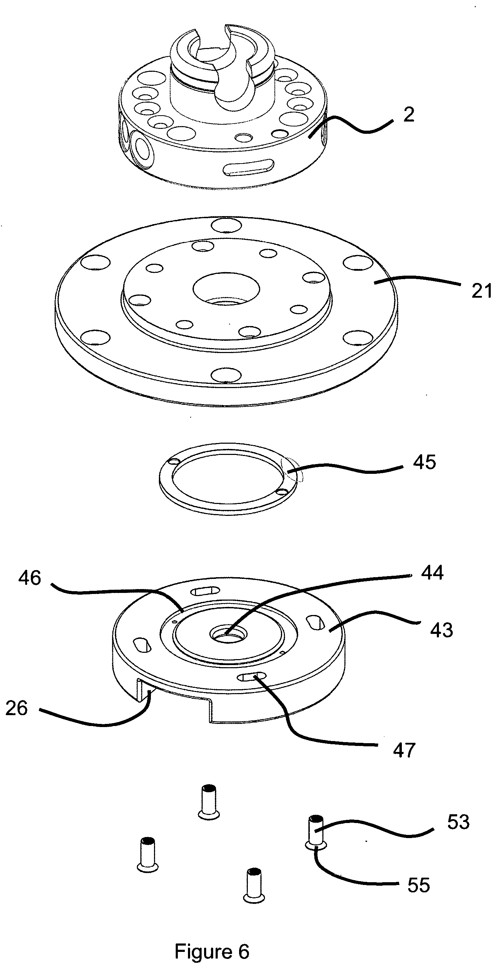

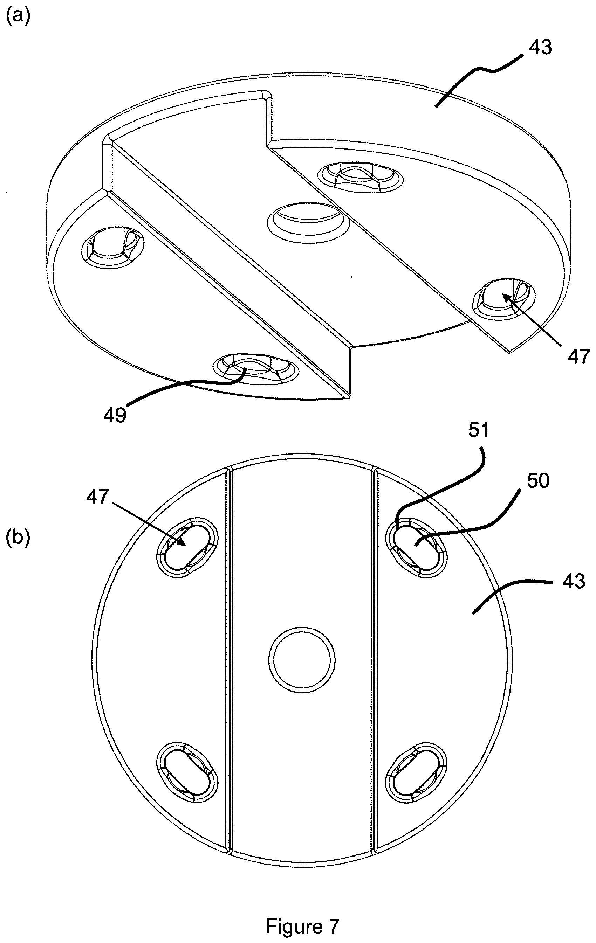

A rotational compliance body 43 is located on top of the assembly 13 and below the lid 21 of the housing. The rotational compliance body 43 permits the end effector to rotate relative to the robot arm, and will be described in more detail later with reference to Figures 6 and 7.

The second horizontal compliance body comprises the centrally located protrusion 15, and the lower surface 19 of the second horizontal compliance body is downwardly inclined towards the central protrusion 15. This lower surface 19 rests on top of the upper surface 17 of the base 9 of the housing 7. The upper surface 17 of the base is downwardly inclined towards the opening 11 in the base 9.

The assembly 13 is able to move inside the housing 7, to provide horizontal compliance between the robot arm connected to the housing 7, and the end effector connected to the assembly 13 via the centrally located protrusion 15. This compliance permits any misalignment between the end effector and a target object to be compensated, i.e. the passive centraliser allows the end effector to move to an offset position horizontally displaced from the central or nominal position, in order to align with and engage with the target object.

In use, the lower surface 19 of the second horizontal compliance body 27 is able to slide on top of the upper surface 17 of the base 9. Both the lower surface 19 and the upper surface 17 are conical in shape, so the second horizontal compliance body 27 is able to move horizontally in two dimensions relative to the housing 7. The opening 11 in the base 9 is larger in size than the protrusion 15 of the second horizontal compliance body 27, and the internal cavity of the housing 7 is wider than the width of the assembly 13, so the assembly 13 is free to move horizontally until the side of the assembly abuts the internal wall of the housing 7 and the protrusion 15 abuts the edge of the opening 11. When the end effector is not holding a target object, the passive centraliser 1 is considered to be in the "unlocked" position or offset position, i.e. the end effector is free to move horizontally relative to the robot arm.

When the end effector picks up a target object, the weight of the target object pulls the second horizontal compliance body 27 down to the centre of the base 9 of the housing. The lower surface 19 of the second horizontal compliance body 27 slides downwards on the downwardly inclined surface 17 of the base 9 until the second horizontal compliance body 27 is in the centre of the housing, at its lowest possibly vertical level. In this position (the central or "locked" position), the weight of the target object effectively "locks" the passive centraliser in position. The second horizontal compliance body 27 is no longer able to move horizontally because the weight of the target object pulls the assembly 13 down the slope of the downwardly inclined surface 17 of the base 9.

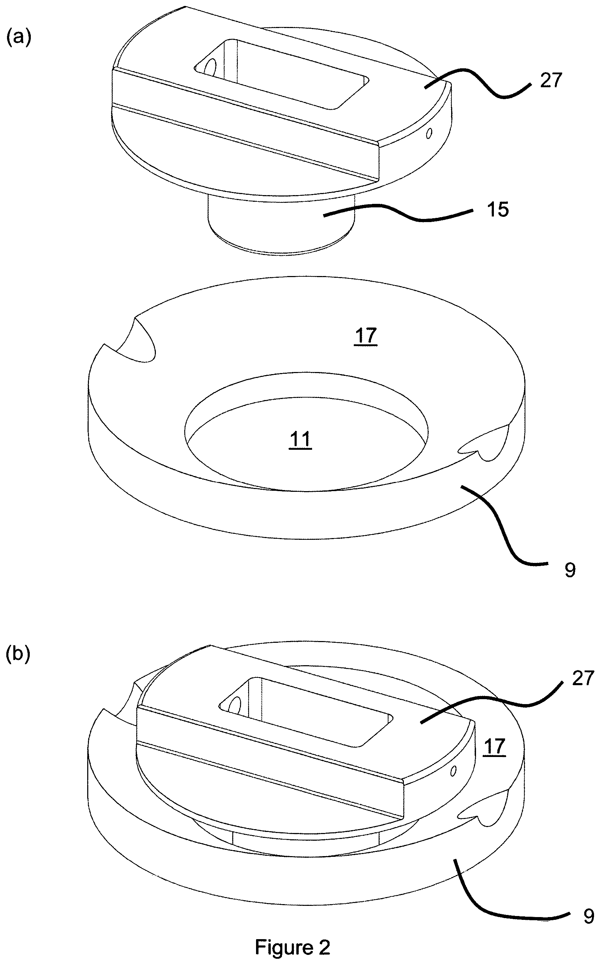

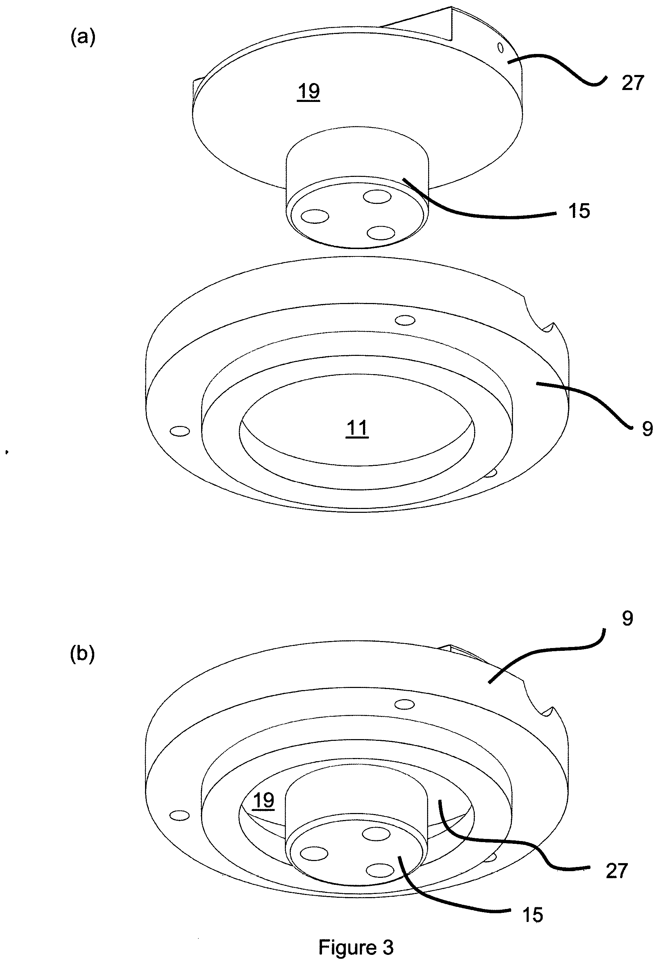

Figure 2 and Figure 3 illustrate how the horizontal centralising of the passive centraliser mechanism works in more detail. Figure 2 is a perspective view from above, in order to better illustrate the shape of the downwardly inclined surface 17 of the base 9 of the housing. Figure 3 is a perspective view from below, in order to better illustrate the shape of the lower surface 19 of the assembly. In both figures, (a) illustrates the second horizontal compliance body 27 and the base 9 of the housing separately, and (b) illustrates the second horizontal compliance body 27 positioned within the base 9 in the central or locked position.

In the illustrated example the base 9 of the housing is a separate part from the main body of the housing, but in other examples the base may be integral with the main body of the housing. The base 9 has a central opening 11 that is circular in shape, and the upper surface 17 of the base 9 is downwardly inclined towards the opening 11. In the illustrated example the downwardly inclined surface 17 is conical in shape with a shallow incline, but in other examples the upper surface may take a different shape. The second horizontal compliance body 27 (i.e. the lowest part of the assembly 13) has a protrusion 15 that is centrally positioned on the lower surface of the body, protruding downwards, and cylindrical in shape. The protrusion 15 is configured to be attached to an end effector. The lower surface 19 of the second horizontal compliance body is downwardly inclined towards the central protrusion 15. The lower surface 19 of the assembly is complementary in shape to the downwardly inclined upper surface 17 of the base 9 of the housing.

When in the locked (central) position, the second horizontal compliance body 27 is positioned centrally on the base 9, with the protrusion 15 located centrally within the opening 11. When in the unlocked (offset) position, the second horizontal compliance body 27 is able to be displaced horizontally as the lower surface 19 slides upwards along the downwardly inclined surface 17.

The width of the housing 7 limits the maximum travel of the assembly 13, and therefore defines the maximum horizontal compliance of the end effector with respect to the robot arm. The arrows in Figure 1 illustrate the distance that the assembly 13 can move laterally within the housing 7; once the assembly abuts the inside wall of the housing 7 the maximum horizontal compliance in that direction has been reached. Different assemblies and housings may be used for different applications, depending on the compliance requirements. The first and second compliance bodies 25, 27 may be designed to have different maximum compliance distances in the x and y directions if required.

The steepness of the incline of the upper surface 17 and lower surface 19 can also be varied, in order to provide a passive centraliser 1 with a different effective stiffness. For example, if the upper surface 17 and lower surface 19 have a steep incline, the passive centraliser has a high stiffness. The assembly will more readily return to its central or locked position under gravity, and more force will be needed in order to push the lower surface 19 up the upper surface 17 to enable the end effector to move into position to engage with the target object. If the upper surface 17 and lower surface 19 have a shallower incline, conversely, the passive centraliser will be effectively less stiff and require less force to move away from the central/locked position. The slope of the upper and lower surfaces may be chosen to give an appropriate effective stiffness for the required application, e.g. depending on the weight of the target object.

In some examples the passive centraliser may be adaptable to different applications by having exchangeable parts. For example the base of the housing and/or the first and/or second horizontal compliance bodies and/or the rotational compliance body may be swapped for alternative parts with different properties, for example with a different steepness of the incline of the upper surface 17 and lower surface 19, or a different distance between a horizontal compliance body and the inner wall of the housing, in order to select the appropriate effective stiffness and/or maximum compliance distance for a specific application.

Figure 4 illustrates one way in which the first horizontal compliance body 25 may be constrained to move in the first horizontal direction (x direction). The parts are shown in exploded view for ease of illustration. The first horizontal compliance body 25 has a ridge 24 on its upper surface, extending in the first horizontal direction. The ridge 24 co-operates with a correspondingly shaped groove 26 on the underside of the rotational compliance body 43, to enable the first horizontal compliance body 25 to slide in the x direction relative to the rotational compliance body 43.

The ridge 24 on the first horizontal compliance body 23 comprises a recess, and within the recess are a pair of blind holes. A first pin 30 is inserted into the recess in the ridge 24, with the opposing ends of the pin 30 inserted into the holes. The pin 30 extends in the first horizontal direction (x direction).

The first horizontal compliance body 25 connects to the rotational compliance body 43, which is positioned directly above. The rotational compliance body 43 has a central hole 44, through which a first stopper 31 extends. The first stopper 31 has a first cap 32 which retains the stopper 31 in the hole 44. The first stopper 31 has in its lower portion a hole extending in the first horizontal direction (x). When assembled, the first pin 30 passes through the hole in the first stopper. The first horizontal compliance body 25 is therefore constrained to move in the first horizontal direction (x) only relative to the rotational compliance body 43, as the first pin 30 moves through the hole in the first stopper 31. The first stopper 32 is held in place by the rotational compliance body 43, so is in a fixed horizontal position relative to the housing. A spring 23 is connected between the first stopper cap 32 and the rotational compliance body 43. The spring 23 pushes the first stopper cap 32 upwards, since the spring 23 resists compression. As the first stopper cap 32 is pushed upwards, it lifts the assembly 13 upwards into the unlocked position.

In a similar way, the second horizontal compliance body 27 is constrained to move in the second horizontal direction (y direction) relative to the first horizontal compliance body 25. Figure 5 illustrates the second horizontal compliance body 27. In a similar way, the second horizontal compliance body 27 has a ridge 28 extending in the second horizontal direction (y direction). The ridge co-operates with a corresponding groove 29 on the underside of the first horizontal compliance body 25 to enable the second horizontal compliance body 27 to move in the second horizontal direction (y) relative to the first horizontal compliance body 25. A second pin 33 extends in the second horizontal direction (y) and is located inside a recess in the ridge 28 of the second horizontal compliance body 27, with the ends of the second pin 33 secured in blind holes within the recess. A second stopper 35 extends vertically through a hole 34 in the first horizontal compliance body 25, with the second pin 33 extending in the y direction through a hole in the lower portion of the second stopper, and a second stopper cap 36 retaining the second stopper 35 in the first horizontal compliance body 25. A spring 37 is connected between the second stopper cap 36 and the second horizontal compliance body 25. In a similar manner to the spring 23, the spring 37 pushes the second stopper cap 36 upwards, since the spring 37 resists compression. As the second stopper cap 36 is pushed upwards, it lifts the second horizontal compliance body 27 upwards into the unlocked position.

It should be noted that the ridge 28 constrains the second horizontal compliance body 27 to move in the x direction with the first horizontal compliance body 25. The second horizontal compliance body 27 can therefore move in both x and y directions: in the x direction with the first horizontal compliance body, and in the y direction relative to the first horizontal compliance body 25.

Figure 6 illustrates how the passive centraliser provides rotational compliance. Again, the parts are shown in exploded view for ease of visualisation. A connector 2 at the top is provided to connect the passive centraliser to a robot arm (not shown). The connector 2 is connected to the lid 21 of the housing. The rotational compliance body 43 is located inside the housing below the lid 21. The rotational compliance body 43 in the illustrated example has four circumferential slots 47. The shape of the slots 47 is the arc of a circle concentric with the rotational compliance body 43, and the slots 47 are evenly spaced, i.e. have an even angular distribution around the centre of the circle. The rotational compliance body 43 is connected to the lid 21 by means of four pins 53, each of which protrudes through a respective slot 47. Each pin 53 has a stop 55 at its lower end, in order to retain the pin 53 in the respective slot 47. The upper ends of the pins are attached to the underside of the lid 21 of the housing. The rotational compliance body 43 is supported by and rests on the stops 55 of the pins 53. The rotational compliance body 43 is able to rotate about its vertical axis relative to the lid 21 of the housing until the edges of the slots abut against the pins 53.

A rotational wear band 45 is provided in between the rotational compliance body 43 and the lid 21. The rotational wear band 45 may be made of a material with a low friction coefficient and/or coated with a low friction coating, in order to provide a smooth and easy relative movement between the rotational compliance body 43 and the lid 21. The rotational wear band 45 may be a sacrificial component, to be replaced when worn, in order to protect the other components from wear due to rotation.

Figure 7 illustrates how the passive centraliser returns to the central angular position. The rotational compliance body 43 is shown in (a) perspective view and (b) plan view, both from underneath in order to more clearly visualise the shape of the slots. The slots 47 have a lower surface 49 that is upwardly inclined towards the centre 50 of the slot 47. That is, the centre 50 of the slot is more deeply recessed into the rotational compliance body than the edges 51 of the slot 47. When in position within the housing of the passive centraliser, the lower surface 49 of the slots 47 is at a higher vertical level toward the centre 50 of the slot 47 than towards the edges 51 of the slot 47.

In use, when the rotational compliance body is in the unlocked position, the pins 53 and their respective slots 47 move relative to each other. As the rotational compliance body moves away from its central position to an offset position, the slots 47 move relative to the pins 53. When the end effector picks up a target object, the weight of the object pulls the rotational compliance body 43 downwards and the lower surface 49 of the slots 47 slides over the stops 55 of the pins 53 until the centre 51 of the slots 47 rests on the stops 55. Since the lower surface 49 is upwardly inclined towards the centre, in the central position the rotational compliance body 43 is at a lower vertical level. This central position is the locked position, since the weight of the object held by the end effector prevents the rotational compliance body 43 from rotating.

The length of the slots 47 defines the maximum length of travel of the pins 53 within the slots, and therefore effectively limits the extent to which the rotational compliance body 43 can rotate relative to the housing (and therefore defines the maximum extent that the end effector 3 can rotate relative to the robot arm 5). As described above, the rotational compliance body 43 could be exchangeable for an alternative rotational compliance body with a different length of travel or a different steepness of inclination of the lower surface 49, to enable the passive centraliser to be easily adapted for applications requiring a different effective rotational stiffness or maximum rotational compliance.

Although the pins-and-slots mechanism as described above and as illustrated in Figures 6 and 7 is used for rotational compliance, a similar mechanism could be used for horizontal compliance. A linear slot could be provided in a horizontal compliance body extending in a horizontal direction, with a pin constrained to move in a horizontal direction within the slot. In a similar way, the horizontally extended slot could be shaped so that the slot is more deeply recessed at the centre of the slot than at the edges, so the horizontal compliance body, when pulled down by the weight of a target object held by the end effector, moves downwards under gravity to its lowest vertical position (the locked position) where the pin is positioned centrally in the slot. Two separate pin-and-slot mechanisms may be provided for compliance in the x and y directions (first and second horizontal directions). As above, the predefined maximum travel in each direction (and therefore the maximum compliance) is defined by the length of the slot. Slot lengths may be chosen independently of each other in order to provide the required compliance in each degree of freedom. Variable slot lengths may be used, with the slot length able to be changed by accessing the assembly within the housing. This can be achieved either by exchanging a compliance body for a different compliance body with a different slot length, or by using a compliance body with adjustable slot length, e.g. by adjusting the position of stoppers with the slot to define the maximum usable port of the slot length.

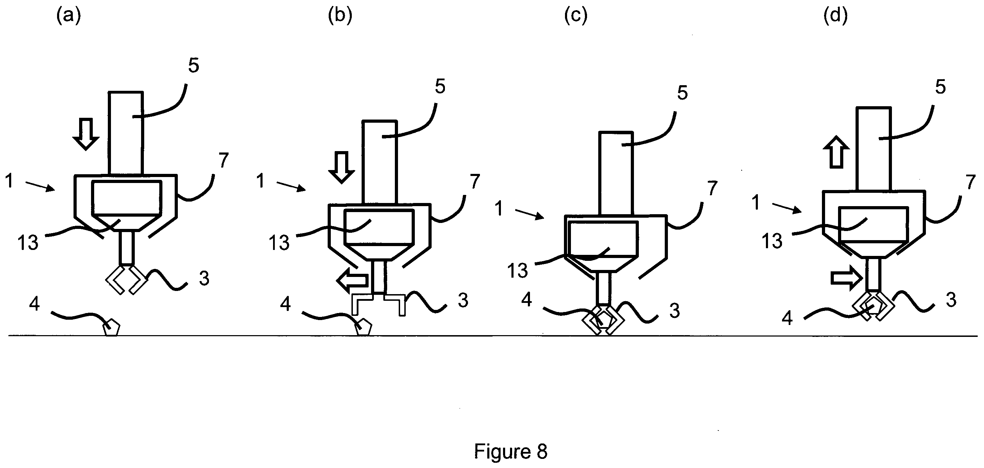

Figure 8 schematically illustrates the passive centraliser 1 in use. The passive centraliser 1 is located at the end of a robot arm 5, connecting the robot arm to an end effector 3. The figure shows different stages of interaction between the robot arm 5 and a target object 4.

The end effector 5 as illustrated is a gripper, but other kinds of end effector may be used. For example, the end effector could be a gripper or magnet (electromagnet or permanent magnet) or sucker or hook. Grippers can engage with the outside of the target object, i.e. the grippers expand, then contract around the object. Alternatively, grippers can engage with the inside of a target object in the shape of a case or box, i.e. the grippers contract, the end effector is lowered into the case, then the grippers expand until they engage with the inside of the walls of the case. Different end effectors may be used for different use cases.

In Figure 8(a) the centraliser 1 is in the unlocked position, because the assembly 13 is biased upwards towards the unlocked position. The assembly 13 is free to move horizontally within the housing 7. The robot arm is approaching the target object 4 in a vertical direction (see arrow on figure). It can be seen that there is a horizontal misalignment between the end effector 3 and the target object 4. If there were no compliance between the robot arm 5 and the end effector 3, the end effector 3 would not be able to engage with the target object 4.

In Figure 8(b) the robot arm 5 has lowered vertically and has almost reached the target object. The end effector 3 is about to pick up the target object. As the grippers of the end effector 3 engage, the assembly 13 of the passive centraliser moves horizontally (see arrow on figure) until the end effector 3 is aligned with / directly above the target object 4.

In Figure 8(c) the end effector 3 has picked up the target object 4. The passive centraliser is in its maximum offset position, where the assembly 13 abuts the inside of the housing 7. The lower surface of the assembly 13 is resting on the upper surface of the base of the housing 7.

In Figure 8(d) the robot arm 5 is lifting the target object 4 up (see arrow on figure). The weight of the target object 4 moves the passive centraliser 1 back into its locked or central position. The lower surface of the assembly 13 rests on and slides down the upper surface of the base of the housing 7 towards the opening in the centre of the base of the housing 7, pulled down by the weight of the target object 4 held by the end effector 3. The shape of the downwardly inclined upper surface of the base of the housing 7 makes the assembly 13 move horizontally and re-centre, as the assembly 13 is pulled down under gravity.

## Claims

1. A passive centraliser for compensating misalignment between an end effector and a target object, the passive centraliser being configured to connect the end effector to a robot arm, the passive centraliser comprising:
a housing configured to connect to the robot arm, the housing comprising a base having an opening;
an assembly within the housing, the assembly comprising a protrusion that protrudes through the opening of the base and is configured to connect to the end effector;
the passive centraliser being moveable between an unlocked position in which the assembly is able to move horizontally relative to the housing, and a locked position in which the assembly is restricted from moving horizontally relative to the housing,
wherein:
the base has an upper surface downwardly inclined toward the opening; and
the assembly comprises a lower surface complementary to the shape of the downwardly inclined upper surface of the base;
wherein:
in the unlocked position the assembly is lifted vertically to separate the lower surface of the assembly from the upper surface of the base and to enable the protrusion to move laterally within the opening; and
when the end effector lifts an object, the weight of the object pulls the assembly down into the locked position to cause the lower surface of the assembly to rest on the upper surface of the base and to position the protrusion centrally in the opening.

2. The passive centraliser of claim 1, wherein the housing comprises a lid, and the compliance compensator comprises a resilient member positioned between the lid and the assembly, the resilient member being arranged to bias the assembly upwards to retain the assembly in the unlocked position.

3. The passive centraliser of claim 1, wherein the upper surface of the base is inclined to allow the assembly to move downwards as the assembly moves in a first horizontal direction towards the opening, and to allow the assembly to move downwards as the assembly moves in a second horizontal direction towards the opening.

4. The passive centraliser of claim 3, wherein the upper surface of the base is conical in shape.

5. The passive centraliser of claim 3 or claim 4, wherein the assembly comprises:
a first horizontal compliance body for compensating for misalignment in the first horizontal direction, and
a second horizontal compliance body for compensating for misalignment in the second horizontal direction, the second horizontal compliance body being located below the first horizontal compliance body and configured to rest on the upper surface of the base of the housing,
wherein the first horizontal compliance body is constrained to move in the first horizontal direction relative to the housing, and the second horizontal compliance body is constrained to move with the first horizontal compliance body in the first horizontal direction and constrained to move relative to the first horizontal compliance body in the second horizontal direction.

6. The passive centraliser of claim 5, wherein the first horizontal compliance body comprises a first horizontal pin extending in the first horizontal direction, the first horizontal pin passing through an opening extending through a first stopper,
wherein the first horizontal compliance body is constrained to move in the first horizontal direction as the first horizontal pin moves in the first horizontal direction through the opening in the first stopper.

7. The passive centraliser of claim 5 or claim 6, wherein the second horizontal compliance body comprises a second horizontal pin extending in the second horizontal direction, the second horizontal pin passing through an opening extending through a second stopper,
wherein the second horizontal compliance body is constrained to move in the second horizontal direction as the second horizontal pin moves in the first horizontal direction through the opening in the second stopper.

8. The passive centraliser of any one of claims 5 to 7, further comprising a resilient member positioned between the first horizontal compliance body and the second horizontal compliance body, the resilient member being arranged to bias the assembly upwards to retain the assembly in the unlocked position.

9. The passive centraliser of any one of claims 5 to 8, wherein the upper surface of the first horizontal compliance body comprises a ridge extending in the first horizontal direction, configured to co-operate with a correspondingly shaped groove on the underside of the rotational compliance body to constrain the first horizontal compliance body to slide in the first horizontal direction relative to the rotational compliance body.

10. The passive centraliser of any one of claims 5 to 9, wherein the upper surface of the second horizontal compliance body comprises a ridge extending in the second horizontal direction, configured to co-operate with a correspondingly shaped groove on the underside of the first horizontal compliance body to constrain the second horizontal compliance body to slide in the second horizontal direction relative to the first horizontal compliance body.

11. The passive centraliser of any one of the preceding claims, wherein the upper surface of the base comprises a seat and the lower surface of the assembly comprises a corresponding lip configured to sit inside the seat when the passive centraliser is in the locked position.

12. The passive centraliser of any one of the preceding claims, wherein the materials of the assembly and the housing have a low coefficient of friction between the upper surface of the base and the lower surface of the assembly.

13. The passive centraliser of any one of the preceding claims, wherein:
the passive centraliser further comprises a rotational centraliser body positioned inside the housing below a lid of the housing and on top of and connected to the assembly, the rotational compliance body comprising a circumferential slot having a lower surface upwardly inclined towards the centre of the slot;
the lid of the housing comprises a vertical pin extending downwards through the slot and the end of the pin comprises a stop to retain the pin in the slot; and
in the unlocked position the rotational compliance body is able to rotate until the pin reaches the end of its travel in the slot, and in the locked position the rotational compliance body has rotated and lowered under gravity until the pin is in the central position in the slot.

14. The passive centraliser of claim 13, wherein the slot comprises a plurality of slots and the vertical pin comprises a plurality of vertical pins each extending through a respective one of the plurality of slots.

15. The passive centraliser of claim 14, wherein the plurality of slots are evenly distributed circumferentially on the rotational compliance body.

16. A robot arm connected to an end effector via a passive centraliser as defined in any preceding claim.

17. The robot arm of claim 16, wherein the robot arm is configured to move in a vertical direction, a first horizontal direction, and a second horizontal direction.

18. The robot arm of claim 16 or claim 17, wherein the end effector is configured to rotate about a vertical axis relative to the robot arm.
